# EUROPEAN PATENT APPLICATION

(11) **EP 1 127 738 A1**
(43) Date of publication of application: **29.08.2001**
(21) Application number: 00204623.3
(22) Date of filing: 19.12.2000
(51) Int. Cl.: B60P 1/44

(54) **Device for loading and unloading cargo vehicles**

(30) Priority: 23.02.2000 BE 20000141
(71) Applicant: Dhollander, Jan Jozef Prudence, 9160 Lokeren (BE); Derie, Pol Jan Lode, 9111 Belsele (BE)
(72) Inventor: Dhollander, Jan Jozef Prudence, 9160 Lokeren (BE); Derie, Pol Jan Lode, 9111 Belsele (BE)
(74) Representative: Donné, Eddy

(57) **Abstract**

Device for loading and unloading cargo vehicles of the type which is mounted under the loading floor (2) of a cargo vehicle (1), and a loader (3) which can be pushed under the loading floor (2) and which contains a drive (4) therefor, whereby the loader (3) contains a loading platform (5) which is suspended to a removable supporting frame (7) by means of a lifting mechanism (6) with hinged arms (8,9), which can be moved by the above-mentioned drive (4) over at least one guide (9) which can be fixed under the loading floor (2), characterised in that the drive (4) contains at least one drive unit (4A,4B) comprising a displacement mechanism (13) with a fixed part which is attached to a supporting structure (12) and a mobile part, and a course-enlarging coupling (14) between this mobile part and the removable supporting frame (7) which transforms a displacement of said mobile part into a larger displacement of the supporting frame (7).

## Description

The present invention concerns a device for loading and unloading cargo vehicles, of the type which is mounted under the loading floor of a cargo vehicle, and a loader which can be pushed under the loading floor and which contains a drive therefor, whereby the loader contains a loading platform which is suspended to a removable supporting frame by means of a lifting mechanism with hinged arms, which can be moved by the above-mentioned drive over at least one guide which can be fixed under the loading floor.

When the loader is not used, such as for example while driving, the latter is pushed under the loading floor, so that the rear doors of the transport vehicle stay clear. When the loader has to be used, it is pushed from under said loading floor, after which the loading platform can be moved up and down by the lifting mechanism.

The removable supporting frame is usually suspended to a carriage or a trolley which can be moved over guides which are fixed under the loading floor, usually to the chassis of the transport vehicle.

Such a loader is known from Belgian patent No. 1.008659.

In this loader, the drive for moving the removable supporting frame consists of a double-acting drive cylinder.

Since the stroke of the piston rod is equal to the movement of the above-mentioned supporting frame, the piston rod should be at least as long as the distance which this supporting frame has to cover, as a result of which this drive requires relatively much space.

Said space is not always available, however, so that it is impossible to provide such a drive in certain vehicles.

Also, the present invention aims a device for loading and unloading cargo vehicles of the above-mentioned type which does not have the above-mentioned disadvantages, and in particular a drive for the above-mentioned removable supporting frame which is very compact.

To this aim, the drive contains at least one drive unit comprising a displacement mechanism with a fixed part which is attached to a supporting structure and a mobile part, and a course-enlarging coupling between this mobile part and the removable supporting frame which transforms a displacement of said mobile part into a larger displacement of the supporting frame.

The displacement mechanism may be a double-acting cylinder, in which case it should have a stroke which is smaller than the displacement which the removable supporting frame has to carry out, for example half of it.

According to a first embodiment, the course-enlarging coupling may comprise two flexible drawing elements which are fixed to the removable supporting frame on the one hand so as to pull it along, and which are fixed to the above-mentioned supporting structure on the other hand, and two guides for these drawing elements which are provided on the mobile part of the displacement mechanism in the direction of the displacement at a distance from one another and over which the two drawing elements extend in the opposite sense.

Preferably, the mobile part in this embodiment is the cylinder case of a double-acting cylinder whose piston is fixed to the supporting structure by means of at least one piston rod.

The guides on the mobile part of the displacement mechanism may be cable wheels or chain wheels, whereby the flexible drawing elements are cables, chains respectively.

The device may contain two sets of drawing elements, for example one set on each side of the mobile part of the displacement mechanism.

In another embodiment, the course-enlarging coupling contains at least one toothed wheel which is provided on the mobile part of the displacement mechanism in a rotating manner, and two racks working in conjunction with this toothed wheel, of which one is fixed to the supporting structure and the other is connected to the removable supporting frame.

In order to better explain the characteristics of the invention, the following preferred embodiments of a device for loading and unloading cargo vehicles according to the invention are described as an example only without being limitative in any way, with reference to the accompanying drawings, in which:
figure 1 represents a side view with local cut-out of the rear part of a cargo vehicle onto which is provided a loading and unloading device according to the invention;
figures 2 and 3 represent side views, similar to those of figure 1, but with the drive means for pushing the loader in another position;
figure 4 represents a section according to line IV-IV in figure 1;
figures 5 and 6 represent side views analogous to those in figures 1 to 3, but with reference to another embodiment of the invention.

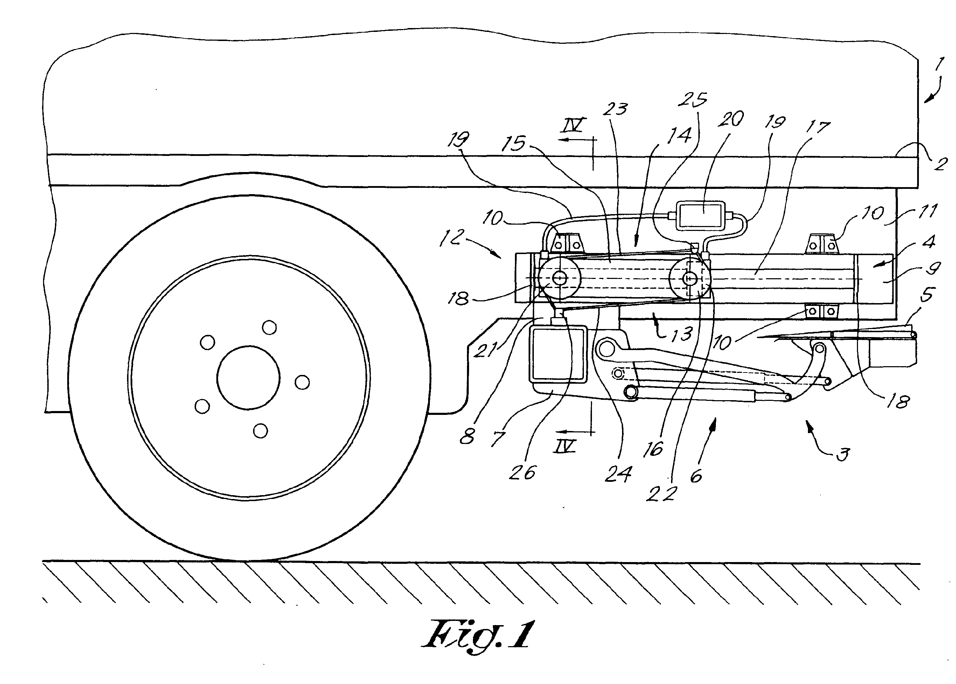

Figures 1 to 4 represent a device for loading and unloading a cargo vehicle 1 which consists of a loader 3 which can be pushed under the loading floor 2 of this cargo vehicle 1 on the one hand, and of a drive 4 for moving this loader 3 on the other hand.

The loader 3 may be of a known design which, as represented, mainly consists of a loading platform 5 which is suspended to a supporting frame 7 by means of a lifting mechanism 6.

By means of sliders 8, the supporting frame 7 can slide over two guides 9 directed in the driving direction of the cargo vehicle 1, which are fixed to the chassis 11 of the cargo vehicle 1, under the loading floor 2, by means of fasteners 10.

According to a variant which is not represented here, the supporting frame 7 can be equipped with wheels and can roll over guides which are fixed to the chassis 11.

The drive 4 consists of two identical drive units 4A and 4B working in conjunction which are erected near both ends of the supporting frame 7 and which are directed crosswise to this supporting frame 7.

Each of said drive units 4A and 4B mainly consists of a supporting structure 12 which is fixed to the chassis 11 and which, in the embodiment represented, is formed of a guide 9 fixed to this chassis 11, a displacement mechanism 13 provided on said supporting structure 12 and a course-enlarging coupling 14.

The displacement mechanism 13 is a double-acting hydraulic cylinder whose piston 16 provided in the cylinder case 15 is fixed to two brackets 18, provided on the guide 9, which are part of the supporting structure 12, by means of two piston rods 17.

The cylinder case 15 thus forms the mobile part of the displacement mechanism 13, and the piston 16 with the piston rods 17 forms the fixed, stationary part thereof.

According to a variant, the cylinder may have only one piston rod 17, whereby the mobile cylinder case 15 is then preferably guided in another manner during its movement.

To the far ends of this cylinder case 15 are connected flexible oil lines 19 for supplying and discharging oil. These oil lines 19 are connected to a hydraulic control and supply unit 20.

According to a variant, the oil lines 19 can open into the cylinder case 15 via the piston rods 17, in which case they must not be flexible.

The course-enlarging coupling 14 contains two guides on one or, as represented, on both sides of the cylinder case 15, formed of cable wheels 21 and 22, which are fixed in a rotating manner on the front and on the back of the side wall of the cylinder case 15, and two drawing elements formed of cables 23 and 24 which extend along the outside over said cable wheels 21 and 22 respectively, and which thus extend in the opposite sense around the cable wheels 21 and 22.

The cable 23 is fixed to the supporting structure 12 on the one hand, in a fastening element 25 situated practically opposite to the middle of the course of the cylinder case 15, and it is fixed to the supporting frame 7 on the other hand by means of a fastening element 26.

In an analogous manner, the cable 24 is also fixed to the supporting frame 12 on the one hand, in particular to the fastening element 25 or in the vicinity thereof, and it is fixed to the supporting frame 7 on the other hand by means of the fastening element 26 or another fastening point situated next to it.

The cables 23 and 24 can be connected with one end so as to form a whole and form a single cable, or they can even be connected to one another with both ends, thus forming a single cable which continues as a loop.

According to a variant which is not represented, the cable wheels 21 and 22 can be replaced by chain wheels, and thus the cables 23 and 24 can be replaced by chains.

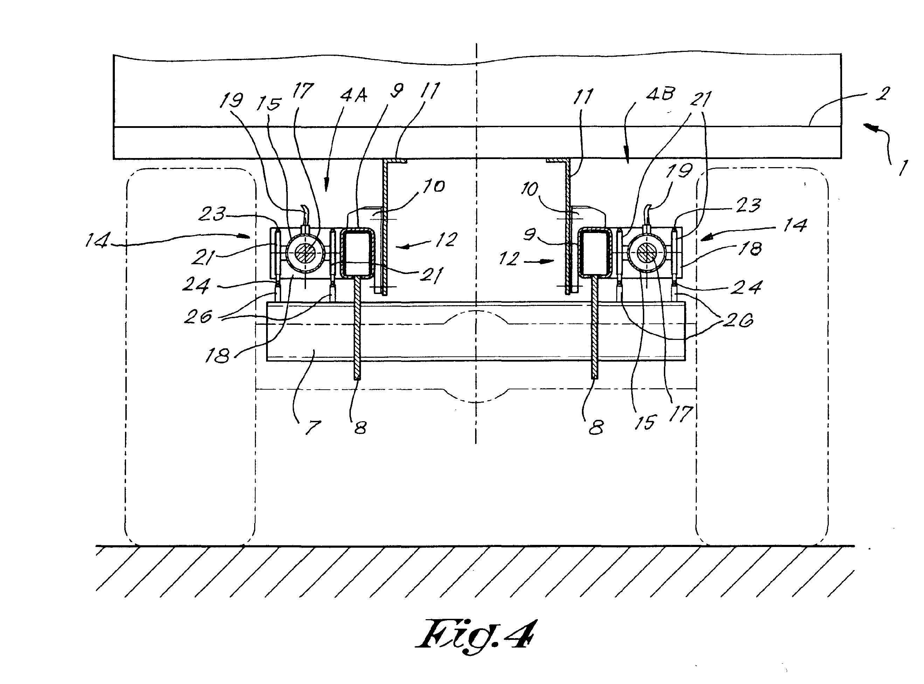

Figures 1 and 4 represent the loader 3 in what is called the driving position, whereby it is pushed under the loading floor 2.

The cylinder case 15 of each drive unit 4A and 4B is then situated on the front end of the supporting structure 12.

When the control and supply unit 20 pumps oil in the cylinder case 15 at the front side of the piston 16, simultaneously for the two drive units 4A and 4B, this cylinder case 15 is pushed backward.

The rear cable wheel 22 pushes the cable 24 backward, as a result of which, since it is fixed to the supporting structure 12, this cable wheel 22 is rotated and the supporting frame 7 is drawn backward over the guides 9.

The cable 23 makes the cable wheel 21 rotate as it is pulled backward together with the supporting frame 7.

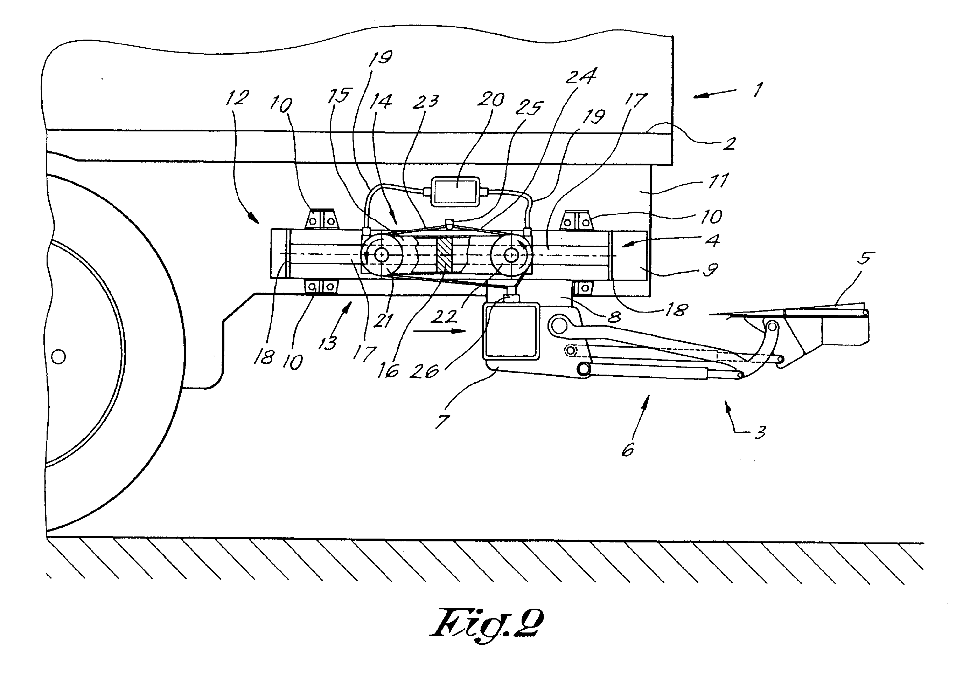

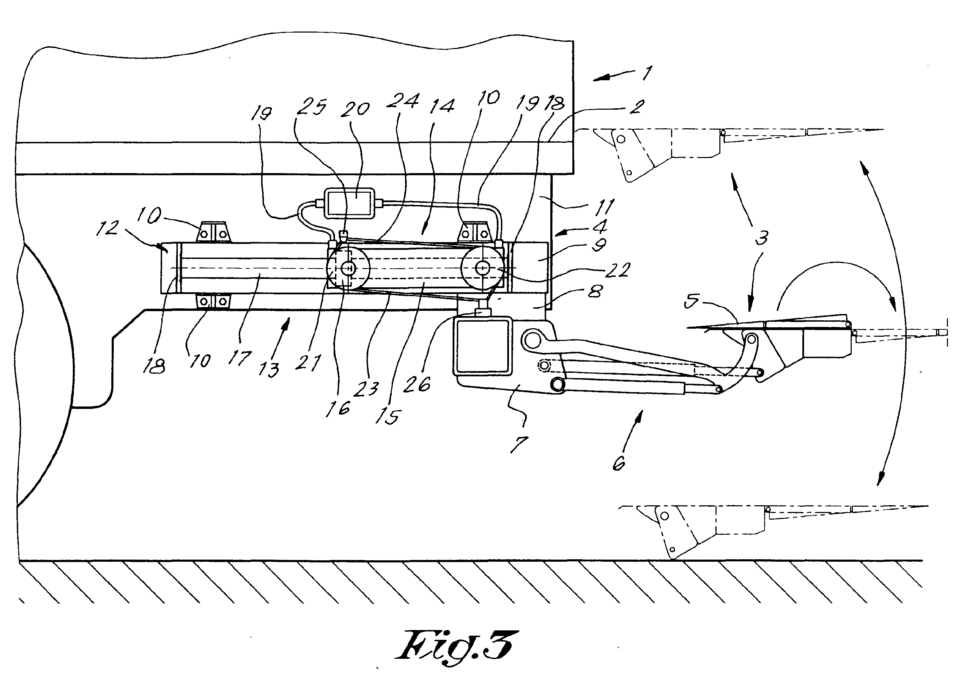

Figure 2 represents the loader 3 in the position in which the cylinder case 15 is situated about halfway the supporting structure 12, and in figure 3, the loader 3 is represented in its rearmost position, i.e. entirely extended. The cylinder case 15 is then situated on the rearmost end of the supporting structure 12.

In this position, the loading platform can be moved up and down by means of the lifting mechanism 6, into the positions which are represented by means of a chain line in figure 3.

The displacement of the supporting frame 7 is twice as large as the displacement of the cylinder case 15. The entire drive 4 is not longer than the loader 3.

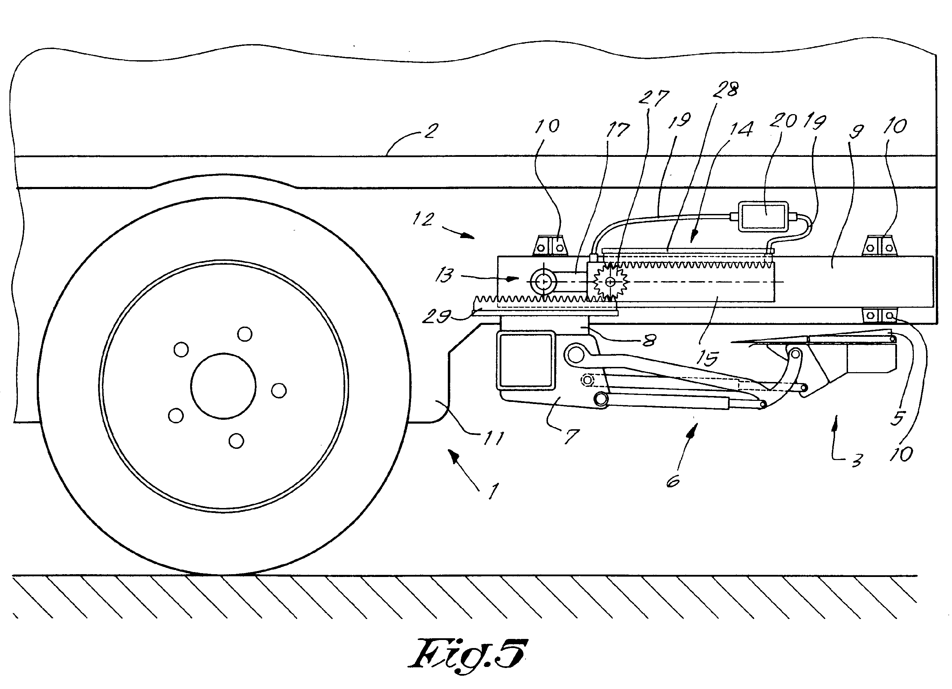

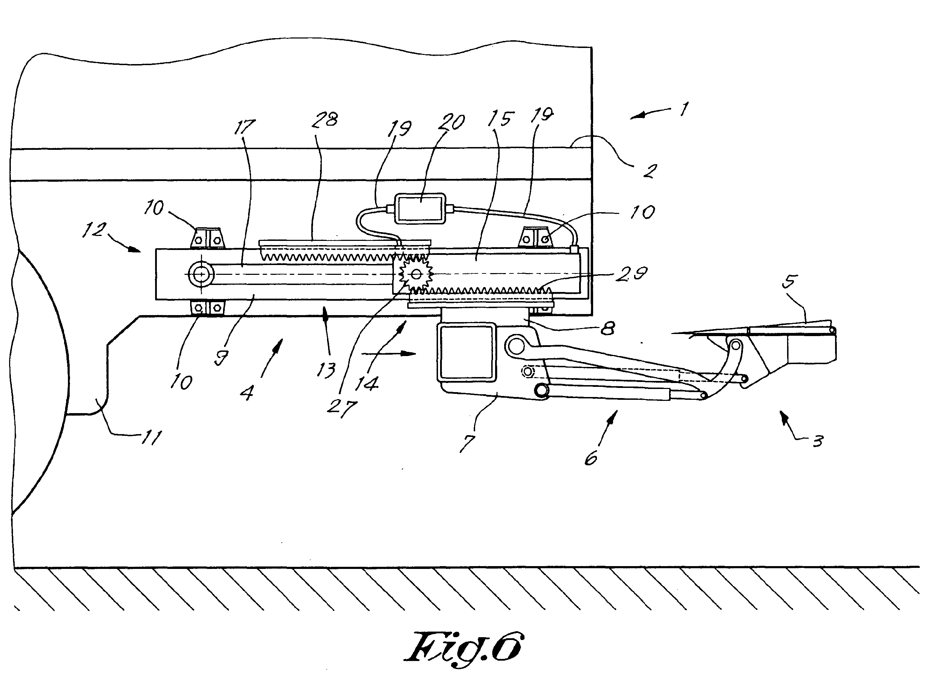

Figures 5 and 6 represent another embodiment of the loading and unloading device which only differs from the above-described embodiment in that the drive 4 has another construction.

Each drive unit 4A and 4B has the same supporting structure 12, and the displacement mechanism 13 also is a double-acting cylinder whose cylinder case 15 forms the mobile part, but the course-enlarging coupling 14 contains a toothed wheel 27 on one side or, as represented, on both sides, which is erected in a rotating manner on the front end of the cylinder case 15, and two racks 28 and 29 per toothed wheel 27, directed parallel to the piston rods 15, in which said toothed wheel 27 meshes, and which are fixed to the supporting structure 12 and to the supporting frame 7 respectively.

The working of the device is analogous to the working described above, with this difference that, when the cylinder case 15 of the drive units 4A and 4B is moved, each of the toothed wheels 27 moves the supporting frame 7 via the rack 29 working in conjunction with it.

Figure 5 represents this supporting frame 7 in its front position, and, on each side of the cylinder case 25, the rack 29 is situated more to the front than the rack 28.

When the cylinder case 15 is pushed backward, each toothed wheel 27 moves over its rack 28, as a result of which it rotates and pushes the other rack 29, and thus the supporting frame 7 connected to it, backward.

Figure 6 represents the position in which the supporting frame 7 is situated as far to the back as possible.

When, from this position, the cylinder case 15 is moved forward again, the rack 29 will be moved forward again together with the supporting frame 7.

In both cases, the displacement of the rack 29 is twice as large as the displacement of the cylinder case 15, which results in a very compact drive.

The invention is by no means limited to the above-described embodiments represented in the accompanying drawings; on the contrary, such a device for loading and unloading a cargo vehicle can be made in all sorts of variants while still remaining within the scope of the invention.

## Claims

1. Device for loading and unloading cargo vehicles, of the type which is mounted under the loading floor (2) of a cargo vehicle (1), and a loader (3) which can be pushed under the loading floor (2) and which contains a drive (4) therefor, and a drive (4) therefor, whereby the loader (3) contains a loading platform (5) which is suspended to a removable supporting frame (7) by means of a lifting mechanism (6) with hinged arms (8,9), which can be moved by the above-mentioned drive (4) over at least one guide (9) which can be fixed under the loading floor (2), characterised in that the drive (4) contains at least one drive unit (4A,4B) comprising a displacement mechanism (13) with a fixed part which is attached to a supporting structure (12) and a mobile part, and a course-enlarging coupling (14) between this mobile part and the removable supporting frame (7) which transforms a displacement of said mobile part into a larger displacement of the supporting frame (7).

2. Device according to claim 1, characterised in that the displacement mechanism (13) is a double-acting cylinder.

3. Device according to claim 1 or 2, characterised in that the course-enlarging coupling (14) comprises two flexible drawing elements (23,24) which are fixed to the removable supporting frame (7) on the one hand so as to pull it along, and which are fixed to the above-mentioned supporting structure (12) on the other hand, and two guides (21,22) for these drawing elements which are provided on the mobile part of the displacement mechanism (13) in the direction of the displacement at a distance from one another and over which the two drawing elements (23, 24) extend in the opposite sense.

4. Device according to claim 2 and 3, characterised in that the mobile part of the displacement mechanism (13) is the cylinder case (15) of a double-acting cylinder whose piston (14) is fixed to the supporting structure (12) by means of at least one piston rod (15).

5. Device according to claim 4, characterised in that the double-acting cylinder contains two piston rods (17) which extend outside the cylinder case (15) on both sides, and which are fixed to the supporting structure (12).

6. Device according to any of claims 3 to 5, characterised in that the guides on the mobile part of the displacement mechanism (13) are cable wheels (21,22) or chain wheels, whereby the flexible drawing elements are cables (23,24), chains respectively.

7. Device according to claim 1 or 2, characterised in that the course-enlarging coupling (14) contains at least one toothed wheel (31) which is provided on the mobile part of the displacement mechanism (13) in a rotating manner, and two racks (28,29) working in conjunction with this toothed wheel (27), of which one is fixed to the supporting structure (12) and the other is connected to the removable supporting frame (7).

8. Device according to claims 2 and 7, characterised in that the mobile part of the displacement mechanism (13) is the cylinder case (15) of a double-acting cylinder whose piston (16) is fixed to the supporting structure (12) by means of at least one piston rod (17), and in that the toothed wheel (27) is provided on one end of the cylinder case (15).

9. Device according to any of the preceding claims, characterised in that the drive (4) contains two identical drive units (4A,4B) working synchronously.
